# EUROPEAN PATENT SPECIFICATION

(11) **EP 2 532 994 B1**
(45) Date of publication and mention of the grant of the patent: **16.07.2014**
(21) Application number: 12166824.8
(22) Date of filing: 04.05.2012
(51) Int. Cl.: F25C 5/00, A47J 43/28, A47F 13/08

(54) **Ice scoop for a freezing device**
Eislöffel für eine Gefriervorrichtung
Cuillère à glace destinée à un dispositif de congélation

(30) Priority: 10.05.2011 TR 201104556
(43) Date of publication of application: 12.12.2012
(73) Proprietor: BSH Bosch und Siemens Hausgeräte GmbH, 81739 München (DE)
(72) Inventor: Arslankiray, Ziya, 59860 Tekirdag (TR); Hastürk, Cemalettin, 59500 Cerkezkoy/Tekirdag (TR); Seval, Mehmet, 34410 Istanbul (TR)

(56) References cited:
- US-A- 1 330 548
- US-A- 2 794 457
- US-A1- 2005 151 384

## Description

The present invention relates to ice scoops which provide taking ice from piece ice container positioned inside freezing devices.

Inside freezing devices, there may be a container wherein ice pieces, for instance ice cubes, exist. Ice pieces, which are provided by an ice piece generator, are stored one above the other inside a container which is in the form of a drawer or a bucket. Because of the operating temperatures of the freezing device, ice pieces can adhere to each other partially. Because of this, ice pieces cannot be removed from the container in an easy manner.

Funnel-shaped scoops for handling material in powdered or granular form have been known for a long time, for example from US 2,794,457. US 2005/0151384 A1 and US 1,330,548 each disclose scoops having an open structure and a flat bottom, respectively.

In the US patent US2009/0140536, an ice scoop is disclosed and has a scoop section with a bottom, a leading edge, two spaced apart side walls extending up from opposed sides of the bottom, and a back between the two side walls extending up from the bottom opposite the leading edge. The scoop has a cavity formed within the bottom. The scoop has a handle connected to and extending rearward from the back. The scoop cavity has an extended cavity section disposed under the handle that is a contiguous part of the cavity. The handle is spaced above the extended cavity section.

Such an ice scoop is grabbed from the handle thereof and it is immersed into the ice bucket and the cavity of the ice scoop is filled. Since the handle exists on the cavity, the cavity weight applies momentum to the handle and there becomes loading on the wrist of the user.

Under the light of the known state of the art, the object of the subject matter invention is to facilitate ice scoop usage for freezing devices.

In order to reach said object, the present invention is an ice scoop for freezing devices which has a handle part which is provided on the rear part of a body, and which has an accumulating part in sheath form which extends at the continuation of the handle part and which takes ice pieces inside. In a preferred embodiment of the subject matter invention, the body has a conical-like structure where the handle part is configured at a width so that the handle part is grabbed by one hand. The conical structure widens at the accumulating part, thus, it takes substantial amount of ice pieces inside and it can be easily grabbed from the narrow handle part. In such a structure, the accumulating part and the handle part are coaxial or their axes are close to each other.

The handle part is in the form of an ellipse comprising two narrow arcs and two wide arcs adjacent to the narrow arcs. Thus, the sharpness of the edge parts is eliminated by means of the narrow arc structure and the edge parts become ergonomic.

In a preferred embodiment of the subject matter invention, there is an inlet which is provided at the front part of the accumulating part and which forms a cutting edge on the base thereof. For instance, the inlet separates the pieces adhering to each other in the ice container and the inlet takes said separated pieces into the accumulating part.

In a preferred embodiment of the subject matter invention, the inlet's peak part, which is opposite to the cutting edge of the inlet, is close to the handle part when compared with the cutting edge. Thus, the inlet area widens in the advancing direction of the body, and it becomes easier to take ice inside the accumulating part.

In a preferred embodiment of the subject matter invention, the inlet has a circular form. Thus, since the inlet does not have a cornered edge, the penetration thereof to the ice container is facilitated.

In a preferred embodiment of the subject matter invention, there is a clip on the body, which extends on the accumulating part and which is fixed to the inlet from one edge thereof. The clip provides the scoop to be fixed to a wall inside the freezer.

In a preferred embodiment of the subject matter invention, there is at least one rear space whose periphery is delimited by the handle part. The rear space provides the ice, filled inside the body, also to be seen from the handle part.

In a preferred embodiment of the subject matter invention, the accumulating part and the handle part are one piece on the body. Thus, they can be produced in an easy manner by bending a single piece plate.

### BRIEF DESCRIPTION OF THE FIGURES

In Figure 1, the perspective view of a representative embodiment of the subject matter ice scoop is given.

In Figure 2, the frontal view of the embodiment illustrated in Figure 1 is given.

In Figure 3, the rear view of the subject matter invention's embodiment illustrated in Figure 1 is given.

### THE DETAILED DESCRIPTION OF THE INVENTION

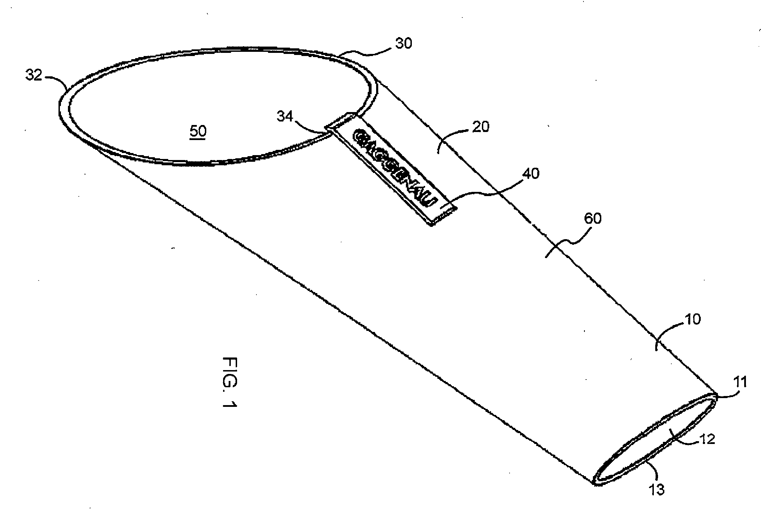

In Figure 1, a representative embodiment of the subject matter ice scoop is illustrated. The ice scoop has a hollow body (60) which is in the form of a cut cone. The narrow part of the cut cone structure forms a handle part (10) and the wide part thereof forms an accumulating part (20). The end of the accumulating part (20) forms an inlet (30) in an inclined manner.

The handle part (10) has an elliptical form whose two sides comprise a narrow arc (11) in an equal manner and whose mutual adjacent parts thereof comprise a wide arc (13). The total of the narrow arc (11) and the wide arc (13) diameters is configured at a dimension so that an average person's hand can grab. For instance, the diameter of the narrow arc is 1 cm and the diameter of the wide arc is 10 cm. The narrow arc (11) defines a wide angle and correspondingly, the wide arc (13) covers a narrow angle. The rear part of the handle part (10) is left open, and a rear space (12) is obtained.

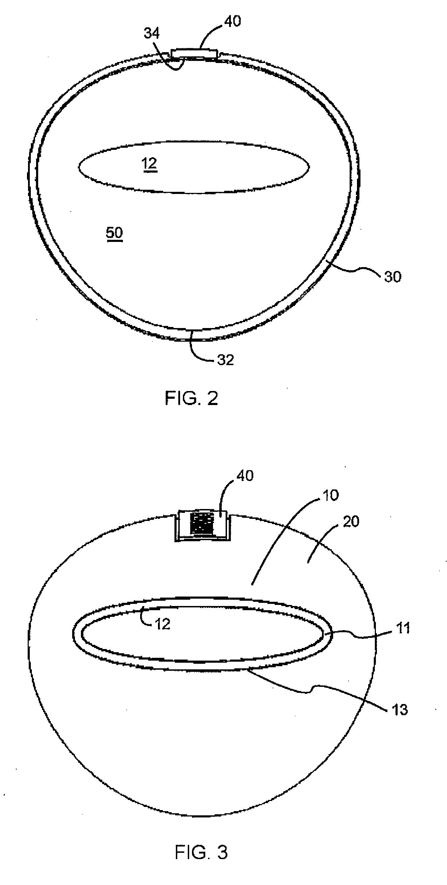

The cutting edge (32) of the inlet (30) is far away from the handle part (10), and correspondingly, the opposite peak part (34) is close to the handle part. On the peak part (34), a rectangular clip (40) extends on the accumulating part (20) from a short edge thereof. In Figure 2 and Figure 3, the frontal and the rear views of the ice scoop are given. The rear space (12) can be seen through the inlet (30).

The body (60), which is fixed to a wall inside the freezer (not illustrated in the figure) by the user by means of the clip (40), is grabbed from the handle part (10) thereof and thereby the body (60) is removed and it is immersed into ice bucket. The cutting edge (32) separates the ice and takes the ice to the accumulating part (20) through the inlet (50). Since the inlet (50) has an inclined form, it enters the ice bucket in a gradual manner. In the cut cone body (60), which is obtained by bending of a one-piece panel, the handle part (10) and the accumulating part (20) are coaxial. Thus, the ice load in the accumulating part (20) can be easily lifted by using only one hand.

### REFERENCE NUMBERS

- 10: Handle part
- 11: Narrow arc
- 12: Rear space
- 13: Wide arc
- 20: Accumulating part
- 30: Inlet
- 32: Cutting edge
- 34: Peak part
- 40: Clip
- 50: Inlet
- 60: Body

## Claims

1. An ice scoop for freezing devices which has a handle part (10) provided on the rear part of a body (60), and which has an accumulating part (20) in sheath form which extends at the continuation of the handle part (10) and which takes ice pieces inside, the body (60) having a conical-like structure where the handle part (10) is configured at a width so that the handle part is grabbed by one hand, **characterized in that** the handle part (10) is in the form of an ellipse comprising two narrow arcs (11) and two wide arcs (13) adjacent to the narrow arcs (11).

2. An ice scoop for freezing devices according to any one of the preceding claims, wherein an inlet (30) is provided at the front part of the accumulating part (20) and said inlet (30) forms a cutting edge (32) on the base thereof.

3. An ice scoop for freezing devices according to Claim 2, wherein the inlet's (30) peak part (34), which is opposite to the cutting edge (32) of the inlet (30), is close to the handle part (10) when compared with the cutting edge (32).

4. An ice scoop for freezing devices according to any one of the preceding claims, wherein the inlet (30) has a circular form.

5. An ice scoop for freezing devices according to any one of the preceding claims, wherein there is a clip (40) on the body (60), which extends on the accumulating part (20) and which is fixed to the inlet (30) from one edge thereof.

6. An ice scoop for freezing devices according to any one of the preceding claims, wherein at least one rear space (12) is provided whose periphery is delimited by the handle part (10).

7. An ice scoop for freezing devices according to any one of the preceding claims, wherein the accumulating part (20) and the handle part (10) are one piece on the body (60).

## Patentansprüche

1. Eislöffel für Gefriervorrichtungen, welcher einen Griffteil (10) aufweist, der am hinteren Teil eines Körpers (60) vorgesehen ist, und welcher einen Aufnahmeteil (20) in Hülsenform aufweist, welcher sich in der Fortsetzung des Griffteils (10) erstreckt und welcher Eisstücke in sein Inneres aufnimmt, wobei der Körper (60) eine kegelartige Struktur aufweist, wobei der Griffteil (10) mit einer solchen Breite ausgebildet ist, dass der Griffteil mit einer Hand ergriffen werden kann,
**dadurch gekennzeichnet, dass** der Griffteil (10) in der Form einer Ellipse ausgebildet ist, die zwei enge Bögen (11) und zwei weite Bögen (13), die den engen Bögen (11) benachbart sind, aufweist.

2. Eislöffel für Gefriervorrichtungen nach einem der vorhergehenden Ansprüche, wobei ein Einlass (30) am vorderen Teil des Aufnahmeteils (20) vorgesehen ist und dieser Einlass (30) an dessen Grundfläche eine Schneidkante (32) bildet.

3. Eislöffel für Gefriervorrichtungen nach Anspruch 2, wobei sich der Spitzenteil (34) des Einlasses (30), welcher der Schneidkante (32) des Einlasses (30) gegenüberliegt, im Vergleich zu der Schneidkante (32) nahe bei dem Griffteil (10) befindet.

4. Eislöffel für Gefriervorrichtungen nach einem der vorhergehenden Ansprüche, wobei der Einlass (30) eine Kreisform aufweist.

5. Eislöffel für Gefriervorrichtungen nach einem der vorhergehenden Ansprüche, wobei eine Federklemme (40) auf dem Körper (60) vorhanden ist, welche sich auf dem Aufnahmeteil (20) erstreckt und welche an dem Einlass (30) von einem Rand desselben 'aus befestigt ist.

6. Eislöffel für Gefriervorrichtungen nach einem der vorhergehenden Ansprüche, wobei mindestens ein hinterer Raum (12) vorgesehen ist, dessen Umfang durch den Griffteil (10) begrenzt wird.

7. Eislöffel für Gefriervorrichtungen nach einem der vorhergehenden Ansprüche, wobei der Aufnahmeteil (20) und der Griffteile (10) als einstückige Teile des Körpers (60) ausgebildet sind.

## Revendications

1. Cuillère à glace pour dispositifs de congélation possédant une partie servant de poignée (10) sur la partie arrière d'un corps (60) et une partie accumulatrice (20) en forme de fourreau s'étendant dans le prolongement de la partie servant de poignée (10) et accueillant des glaçons en son sein, le corps (60) ayant une structure en forme de cône dans laquelle la partie servant de poignée (10) est constituée à une largeur selon laquelle la partie servant de poignée est saisie par une main, **caractérisée en ce que** la partie servant de poignée (10) est de forme elliptique comprenant deux arcs étroits (11) et deux arcs larges (13) adjacents aux arcs étroits (11).

2. Cuillère à glace pour dispositifs de congélation selon l'une quelconque des revendications précédentes, dans laquelle une entrée (30) est prévue sur la partie avant de la partie accumulatrice (20) et ladite entrée (30) forme un bord tranchant (32) à la base de celle-ci.

3. Cuillère à glace pour dispositifs de congélation selon la revendication 2, dans laquelle la partie au sommet (34) de l'entrée (30), qui est opposée au bord tranchant (32) de l'entrée (30), est proche de la partie servant de poignée (10) comparativement au bord tranchant (32).

4. Cuillère à glace pour dispositifs de congélation selon l'une quelconque des revendications précédentes, dans laquelle l'entrée (30) possède une forme circulaire.

5. Cuillère à glace pour dispositifs de congélation selon l'une quelconque des revendications précédentes, dans laquelle un clip (40) se trouve sur le corps (60), s'étend sur la partie accumulatrice (20) et est fixé à la sortie (30) par un bord.

6. Cuillère à glace pour dispositifs de congélation selon l'une quelconque des revendications précédentes, dans laquelle au moins un espace arrière (12) dont la périphérie est délimitée par la partie servant de poignée (10) est prévu.

7. Cuillère à glace pour dispositifs de congélation selon l'une quelconque des revendications précédentes, dans laquelle la partie accumulatrice (20) et la partie servant de poignée (20) constituent une pièce du corps.
